# EUROPEAN PATENT APPLICATION

(11) **EP 4 088 629 A1**
(43) Date of publication of application: **16.11.2022**
(21) Application number: 20911575.7
(22) Date of filing: 21.12.2020
(51) Int. Cl.: A47J 36/00, A47J 36/32, A47J 47/01

(54) **AUTOMATIC WATER-ADDING DEVICE AND COOKING MACHINE**

(30) Priority: 06.01.2020 CN 202020024656 U
(71) Applicant: Zhejiang Shaoxing Supor Domestic Electrical Appliance Co., Ltd., Shaoxing, Zhejiang 312017 (CN)
(72) Inventor: YANG, Baobin, Shaoxing, Zhejiang 312017 (CN)
(74) Representative: LLR
(86) International application number: PCT/CN2020/137873
(87) International publication number: WO 2021/139511

(57) **Abstract**

Provided are an automatic water-adding device and a cooking machine (10). The automatic water-adding device is for use in the cooking machine (10) which comprises a cooking pot (12) and a pot cover (13) capable of covering the cooking pot (12). The automatic water-adding device comprises a water tank (21) for storing water, a valve plug (22) and a controller, wherein the water tank (21) is arranged on the pot cover (13) and has a water outlet (211), the valve plug (22) has a valve hole (221), and the controller is able to control the valve plug (22) to move between an initial first position in which the valve hole (221) of the valve plug (22) is not in communication with the water outlet (211) of the water tank (21) so that water in the water tank (21) cannot flow into the cooking pot (12) and a second position for adding water in which the valve hole (221) is in communication with the water outlet (211) of the water tank (21) so that water in the water tank (21) can flow into the cooking pot (12). The automatic water-adding device can automatically add water into the cooking pot (12) in a timely manner to prevent food ingredients from burning and sticking to the bottom thereof.

## Description

The present invention relates to the technical field of electric home appliances, in particular to an automatic water-adding device for use in a cooking machine and a cooking machine.

Modern people live a life busy working and most of them have no time to cook food or do not know how to. However, Chinese people are used to eating cooked food, and many dishes need to be made by means of stir frying, boiling or steaming. Thus, cooking machines emerge as a new generation of smart cooking devices and have gradually entered the homes of modern people. A cooking machine not only can stir fry food, but also has functions such as frying, stewing, steaming, and boiling. An existing cooking machine generally carries with it various recipes and a user need only add food ingredients into the cooking machine and select a corresponding cooking program thereof in order to achieve automatic dish making. In addition, the device is easy and convenient to operate.

However, during stir frying, especially when stir frying dishes that have little liquid or no liquid, problems such as local charring or sticking to a pot bottom can easily occur, causing the creation of carcinogens and oil fume and harming people's health. It is known that when manually stir frying food, a skilled cook will add a certain amount of water when making such dishes. However, for an existing cooking machine, a large amount of grease is generally added to prevent sticking to a pot bottom. But the intake of a large amount of grease presents a certain degree of harm to a person's health, for example, causing illnesses such as obesity, fatty liver, hypertension, hyperlipidemia, and hyperglycemia. As modern people care more and more about health and seek food that is delicious while having little fat, such an existing cooking machine has gradually become unable to meet people's needs for delicious and healthy food.

An object of the present invention is to provide an automatic water-adding device and a cooking machine that can automatically add water to a cooking pot in a timely manner.

According to an aspect of embodiments of the present invention, an automatic water-adding device for use in a cooking machine is provided. The cooking machine comprising a cooking pot and a pot cover that can cover and close the cooking pot. The automatic water-adding device comprises a water tank for storing water provided on the pot cover and having a water outlet, a valve plug, and a controller. The valve plug has a valve hole. The valve plug has an initial first position in which the valve hole of the valve plug is not in communication with the water outlet of the water tank so that water in the water tank cannot flow into the cooking pot, and a second position for adding water in which under the control of the controller, the valve plug is such that the valve hole is in communication with the outlet of the water tank so that water in the water tank can flow into the cooking pot. In other words, the controller is able to control the valve plug to move between the initial first position and the second position for adding water in which the valve hole is in communication with the water outlet of the water tank so that water in the water tank can flow into the cooking pot.

Further, the automatic water-adding device further comprises an electromagnet, and the controller controls the valve plug by controlling the ON and OFF of the electromagnet, wherein when the electromagnet is not energized, the vale hole of the valve plug is not in communication with the water outlet of the water tank; when the electromagnet is energized, under the magnetic force of the electromagnet, the valve plug is driven to move so that the valve hole of the vale plug is in communication with the water outlet of the water tank. In other words, the valve plug is made of magnetizable material, the automatic water-adding device further comprises an electromagnet, and the controller controls the valve plug by controlling the ON and OFF of the electromagnet, wherein when the electromagnet is not energized, the valve plug is in the initial first position; when the electromagnet is energized, under the magnetic force of the electromagnet, the valve plug is driven to move to the second position for adding water. Thus, the switching between two states, opened and closed, of the water outlet of the water tank is achieved by controlling the ON and OFF of the electromagnet.

Further, the automatic water-adding device further comprises a spring configured to enable the valve plug to move back to the initial first position from the second position for adding water when the electromagnet is de-energized.

Further, the pot cover is provided with a valve plug hole, the automatic water-adding device further comprises a spring, and the spring and the valve plug are both provided in the valve plug hole, with one end of the spring connected to the valve plug, and the other end fixed to a wall of the valve plug hole, wherein when the electromagnet is not energized, the spring is in a free state, and the valve plug and the electromagnet are spaced apart; when the electromagnet is energized, the electromagnet attracts an end face of the valve plug such that the valve plug moves in the valve plug hole and the spring is stretched. Thus, it can be ensured that the valve plug is able to return to the initial position under the effect of the elastic recovery force of the spring.

Further, the electromagnet is provided on a wall of the cooking pot. The wall of the cooking pot acts to support and position the electromagnet.

Further, the cooking machine further comprises a handle installed on the cooking pot, the electromagnet being covered by the handle. Thus, the electromagnet is prevented from being exposed to the outside

Further, the cooking machine comprises a host, and the automatic water-adding device further comprises a power module electrically connected to the controller and used for supplying power to the electromagnet, wherein the controller and the power module are provided in the host, and the controller is used to control the power module. Thus, by controlling the power module, control of the ON and OFF of the electromagnet is achieved.

Further, the automatic water-adding device further comprises a temperature sensor provided in the cooking pot and used for measuring the temperature of food ingredients in the cooking pot, wherein when the temperature of the food ingredients or the rate of change of the temperature of the food ingredients measured by the temperature sensor reaches a predetermined threshold, the controller controls the power module to supply power to the electromagnet. Thus, by automatically controlling the ON and OFF of the electromagnet through temperature feedback, water is automatically added or not into the cooking pot.

Further, the temperature sensor is a negative temperature coefficient resistance.

Thus, a change in temperature of food ingredients in the cooking pot is detected by means of a change in resistance.

Further, the cooking pot comprises a base, and the automatic water-adding device comprises a first coupler and a second coupler. The first coupler is provided on the base of the cooking pot and electrically connected to the electromagnet. The second coupler is provided on the host and electrically connected to the power module. When the cooking pot is installed on the host, the first coupler and the second coupler are coupled so as to electrically connect the electromagnet to the power module. Thus, by the coupling between the first coupler and the second coupler, the electrical connection of the electromagnet to the power module is achieved.

Further, the water tank and the pot cover are integrally formed. Thus, not only can the manufacturing process be simplified and costs be saved, but also cleaning is facilitated.

Further, the valve plug has a cylindrical shape with a first end face and a second end face opposed to each other, and the valve hole is provided between the first end face and the second end face. Such a valve plug is simple in structure and easy to process.

The automatic water-adding device according to embodiments of the present invention can automatically add water into the cooking pot in a timely manner to prevent food ingredients from being burnt and sticking to the bottom of the cooking pot during the course of being stir fried in the cooking pot. The automatic water-adding device according to embodiments of the present invention can make the entire machine smarter without human monitoring. In addition, there is no longer need to worry about food sticking to the bottom of the cooking pot when stir frying dishes, a user's utilization experience is thus improved.

Moreover, the automatic water-adding device according to embodiments of the present invention is of a simple structural design, reliable performance, and a low cost.

According to another aspect of embodiments of the present invention, it is provided a cooking machine comprising a host, a cooking pot detachably installed on the host, and a pot cover that can cover and close the cooking pot. The cooking machine comprises an automatic water-adding device as described above.

The cooking machine according to embodiments of the present invention is smarter and, by means of the automatic water-adding device, can automatically add water into the cooking pot in a timely manner during cooking so as to avoid the phenomena such as food burning and sticking to the bottom of the cooking pot when stir frying dishes in the cooking pot. It also avoids adding a lot of oil in cooking, ensuring that the food ingredients are less oily and delicious.

In addition, the cooking machine according to embodiments of the present invention is of a simple structural design, reliable performance, and a low cost.

### Brief description of drawings

Fig. 1 is a view in perspective of a cooking machine according to an embodiment of the present invention;
Fig. 2 is a partial sectional view of the cooking machine shown in Fig. 1;
Fig. 3 is an exploded view in perspective of the cooking machine shown in Fig. 1;
Fig. 4 is a view in perspective of the pot cover of a cooking machine according to an embodiment of the present invention;
Fig. 5 is a top view of the pot cover shown in Fig. 4;
Fig. 6 is a sectional view along the A-A line in Fig. 5;
Fig. 7 is a view in perspective of the valve plug according to an embodiment of the present invention;
Fig. 8 is a top view of the valve plug shown in Fig. 7;
Fig. 9 is a sectional view along the B-B line in Fig. 8;
Fig. 10 is a partial sectional view of a cooking machine according to an embodiment of the present invention, with the host removed, in the state where the water outlet of the water tank is closed;
Fig. 11 is a partial sectional view of a cooking machine according to an embodiment of the present invention, with the host removed, in the state where the water outlet of the water tank is open;
Fig. 12 is an enlarged view of the circled part in Fig. 11.

### Detailed description

Exemplary embodiments will be described in detail herein, examples of which are illustrated in the accompanying drawings. When the following description refers to the drawings, the same reference numerals in different drawings represent the same or similar elements unless otherwise indicated. The modes of realization described in the illustrative exemplary embodiments below do not represent all modes of realization conform with the present invention. Instead, they are merely examples of devices conform with some aspects of the present invention as recited in the appended claims.

The terminology used in the present invention is only for the purpose of describing particular embodiments and is not intended to limit the present invention. Unless otherwise defined, technical or scientific terms used in the present invention shall have the ordinary meaning as understood by those of ordinary skill in the art to which the present inventionn belongs. The terms "first," "second," and the like used in the description and claims of the present invention do not denote any order, quantity, or importance, but are only used to distinguish different components. Likewise, "a" or "an" and the like do not denote a quantitative limitation, but rather denote the presence of at least one. "A plurality of" or "several" means two or more. Unless otherwise indicated, the terms "front", "rear", "lower" and/or "upper", and the like are for convenience of description only and are not limited to one position or one spatial orientation. Words like "include" or "comprise" mean that the elements or items appearing before "include" or "comprise" cover the elements or items listed after "include" or "comprise" and their equivalents, and do not exclude other elements or objects. "Connected" or "linked" and similar words are not limited to physical or mechanical connections, but may include electrical connections, whether direct or indirect. As used in this specification and the appended claims, the singular forms "a," "said," and "the" are intended to include the plural forms as well, unless the context clearly indicates otherwise. It should also be understood that the term "and/or" as used herein refers to and includes any and all possible combinations of one or more of the associated listed items.

It should be noted that, in order to better illustrate the innovation of the present invention, only the structural features closely related to the creative points of the present invention are shown and described in the accompanying drawings and the specification of the present invention, and other structural features that are not very relevant or other existing structural features are omitted or described briefly. However, this does not mean that the cooking machine of the present invention necessarily does not include these other structural features, and the cooking machine of the present invention may still include other structural features that are necessary for realizing basic functions of the cooking machine.

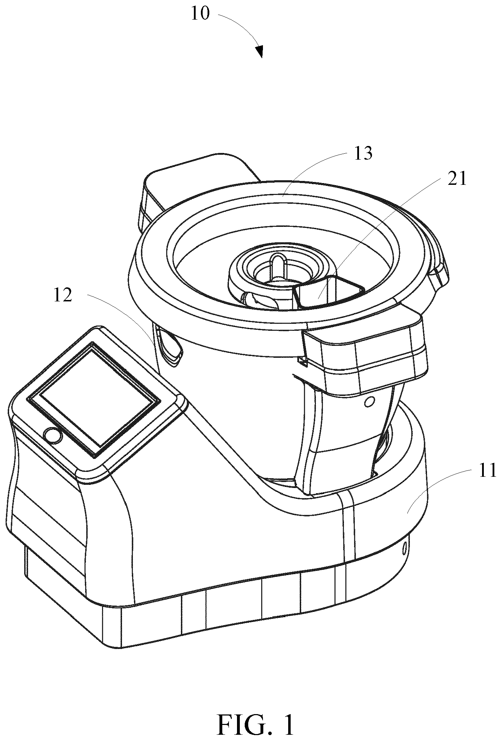

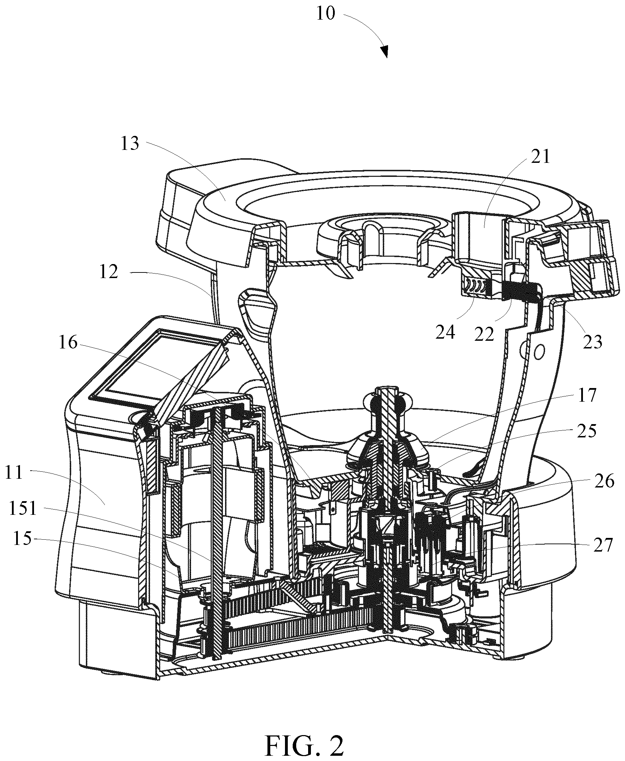

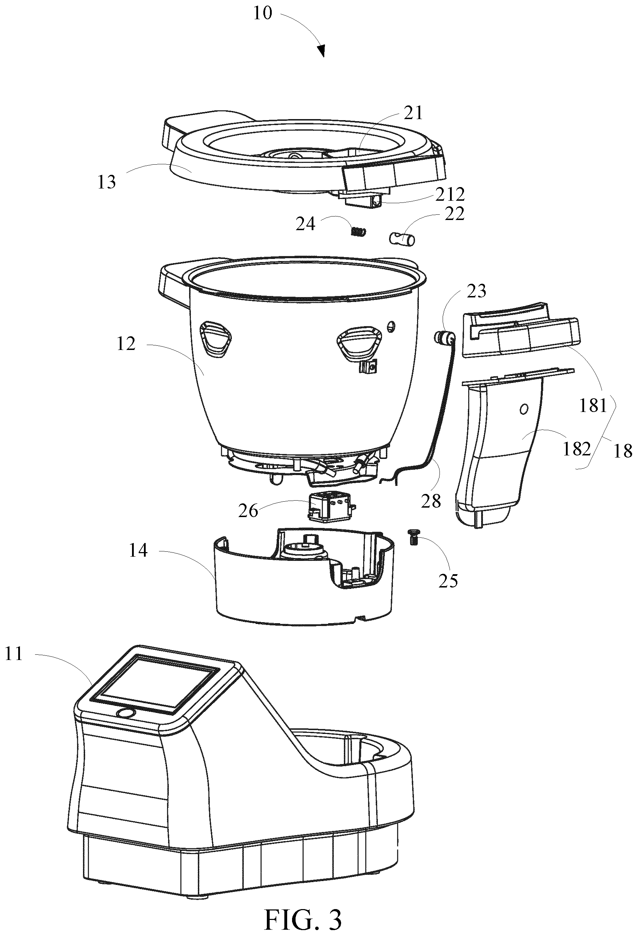

Fig. 1 is a schematic view in perspective of a cooking machine 10 according to an embodiment of the present invention, Fig. 2 is a partial sectional view of the cooking machine 10 shown in Fig. 1, and Fig. 3 is an exploded view in perspective of the cooking machine 10 shown in Fig. 1. As shown in Figs. 1 to 3, the cooking machine 10 according to an embodiment of the present invention comprises a host 11, a cooking pot 12, and a pot cover 13.

The host 11 can provide power, control and drive the cooking machine 10 to work, and can interact with a user. The host 11 can comprise an electric motor 15. A circuit board (not illustrated) is provided inside the host 11.

The cooking pot 12 is detachably installed on the host 11. A heating assembly 16 for heating food ingredients is provided inside the cooking pot 12. In an embodiment, the cooking pot 12 comprises a base 14, and the heating assembly 16 can comprise for example a heating plate provided on the base 14. Food ingredients can be accommodated and heated, stirred, stir fried, etc., inside the cooking pot 12. A stirring blade 17 connected to a rotary shaft 151 of the motor 15 via a transmission part (not designated by a reference numeral) can be assembled inside the cooking pot 12, and the motor 15 can drive the stirring blade 17 to rotate so as to achieve the objective of stir frying food ingredients.

The pot cover 13 detachably covers and closes the cooking pot 12. When the cooking machine 10 operates, the pot cover 13 covers and closes the cooking pot 12. After the operation of the cooking machine 10 ends, the pot cover 13 can be detached from the cooking pot 12. In some embodiments, during cooking by the cooking machine 10, the pot cover 13 can be opened to add food ingredients.

In some embodiments, the cooking machine 10 of the present invention can further comprise a handle 18 for easy holding. In reference to Fig. 3, in an embodiment, the handle 18 can comprise a handle upper cover 181 and a handle lower cover 182 on which the handle upper cover 181 can be installed. The handle lower cover 182 is installed to a side of the cooking pot 12, and the pot cover 13 can cover the handle upper cover 181 from above.

In order to prevent phenomenon such as local burning or sticking to the pot bottom from occurring during cooking by the cooking machine 10, the cooking machine 10 of embodiments of the present invention provides an automatic water-adding device capable of timely automatically adding water into the cooking machine 10. The automatic water-adding device according to an embodiment of the present invention comprises a water tank 21 for storing water, a valve plug 22, and a controller (not illustrated).

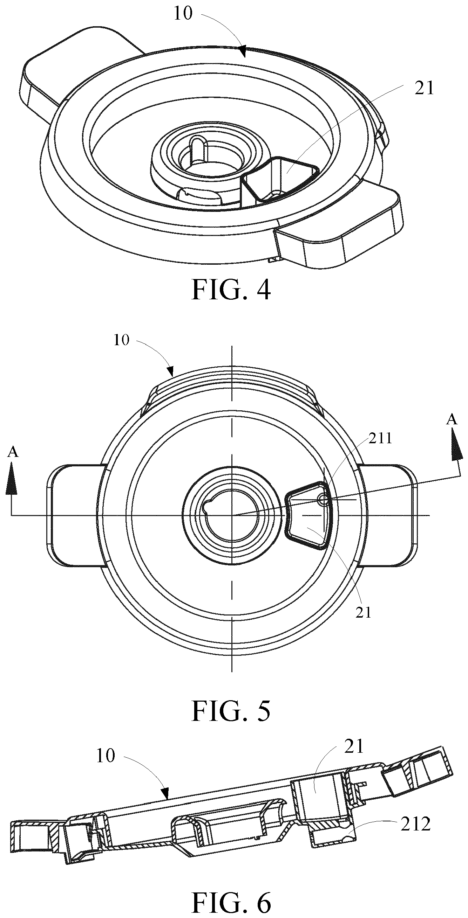

The water tank 21 can be provided on the pot cover 13 of the cooking machine 10. Figs. 4 to 6 show the pot cover according to an embodiment of the present invention. As shown in Figs. 4 to 6, the water tank 21 can be provided, for example, at the top of the pot cover 13, and has a water outlet 211 provided at the bottom of the water tank 21. In an embodiment, the water tank 21 can be designed to be integral with the pot cover 13, so that not only can the manufacturing process be simplified and costs saved, but also cleaning is easy.

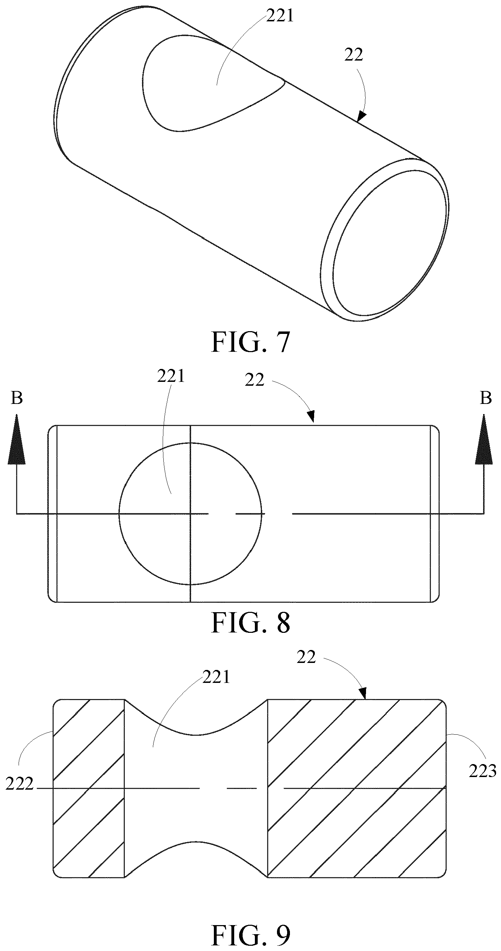

Figs. 7 to 9 show the valve plug 22 according to an embodiment of the present invention. As shown in Figs. 7 to 9, the valve plug 22 has a through valve hole 221. The valve plug 22 can for example have a cylindrical shape with a first end face 222 and a second end face 223 opposed to each other, the valve hole 221 being provided between the first end face 222 and the second end face 223 of the valve plug 22.

In reference to Fig. 6 again, in an embodiment, a valve plug hole 212 is provided in the pot cover 13. The valve plug hole 212 can be provided, for example, in an inner wall of the pot cover 13. The valve plug 22 is capable of being movably provided in the valve plug hole 212 of the pot cover 13.

In an embodiment, the controller can be provided, for example, on the circuit board of the host 11.

When water is not needed to be added into the cooking pot 12, the valve hole 221 of the valve plug 22 is not in communication with the water outlet 211 of the water tank 21. At this time, water in the water tank 21 cannot flow into the cooking pot 12. During cooking, when it is determined that water is needed to be added into the cooking pot 12, the controller can automatically control the valve hole 221 of the valve plug 22 to be in communication with the water outlet 211 of the water tank 21, so that water in the water tank 21 can flow into the cooking pot 12.

The automatic water-adding device according to embodiments of the present invention can automatically add water into the cooking pot 12 in a timely manner to prevent food ingredients from being burnt and sticking to the bottom of the cooking pot 12 during the course of being stir fried. The automatic water-adding device according to embodiments of the present invention can make the entire machine smarter without human monitoring. In addition, there is no longer need to worry about food sticking to the bottom of the cooking pot during cooking, thus effectively preventing the creation of oil fume and carcinogens due to burning and bottom sticking of food ingredients and achieving both the deliciousness and the healthiness of food.

In addition, the automatic water-adding device according to embodiments of the present invention employs a structural design comprising the valve plug 22 so that the entire structure is simple, reliable, and cost saving.

In an embodiment, the valve plug 22 is made of a metallic magnetizable material, and the automatic water-adding device according to embodiments of the present invention can further comprise an electromagnet 23. The electromagnet 23 is electrically connected to the controller. The controller controls the valve plug 22 by controlling the ON and OFF of the electromagnet 23.

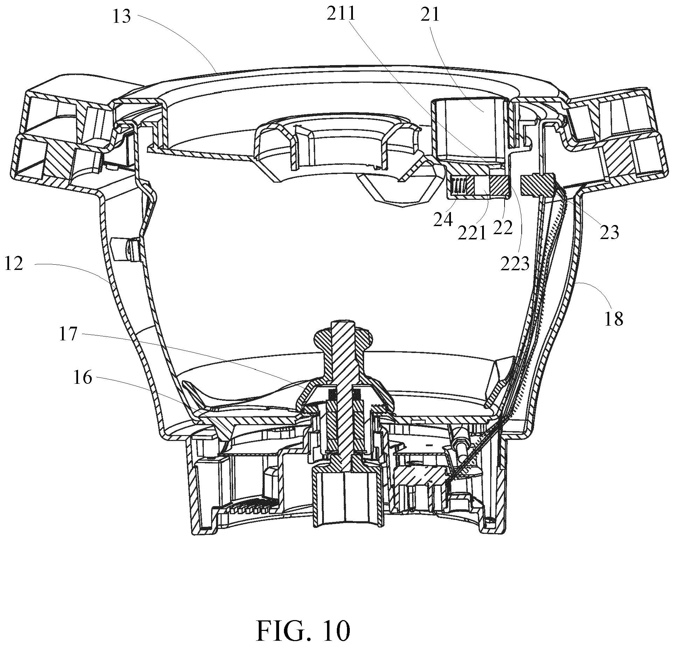

The valve plug 22 has an initial first position and a second position for adding water. Fig. 10 shows the cooking machine 10 according to an embodiment of the present invention, with the host 11 removed, in a state where the water outlet 211 of the water tank 21 is closed. As shown in Fig. 10, when the electromagnet 23 is not energized, the valve plug 22 is in the initial first position in which the valve hole 221 of the valve plug 22 is not in communication with the water outlet 211 of the water tank 21, which is blocked by the solid body part of the valve plug 22 and thus in a closed state, and water in the water tank 21 cannot flow into the cooking pot 12 via the water outlet 211.

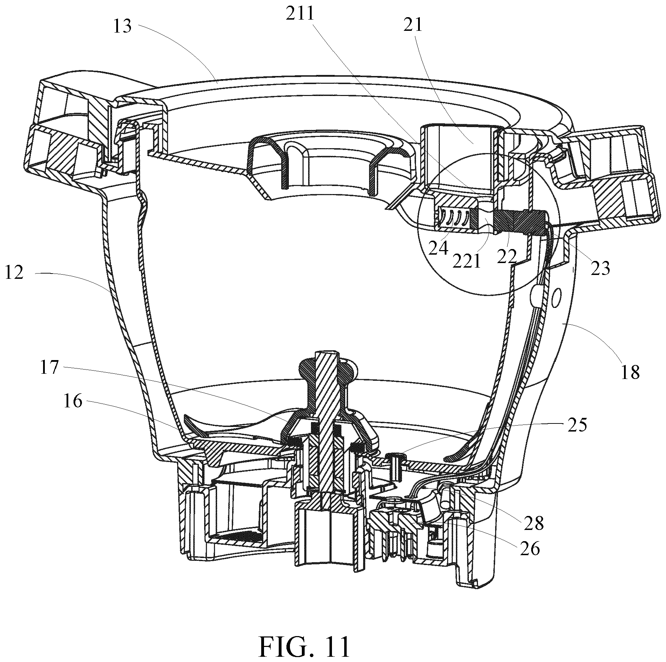

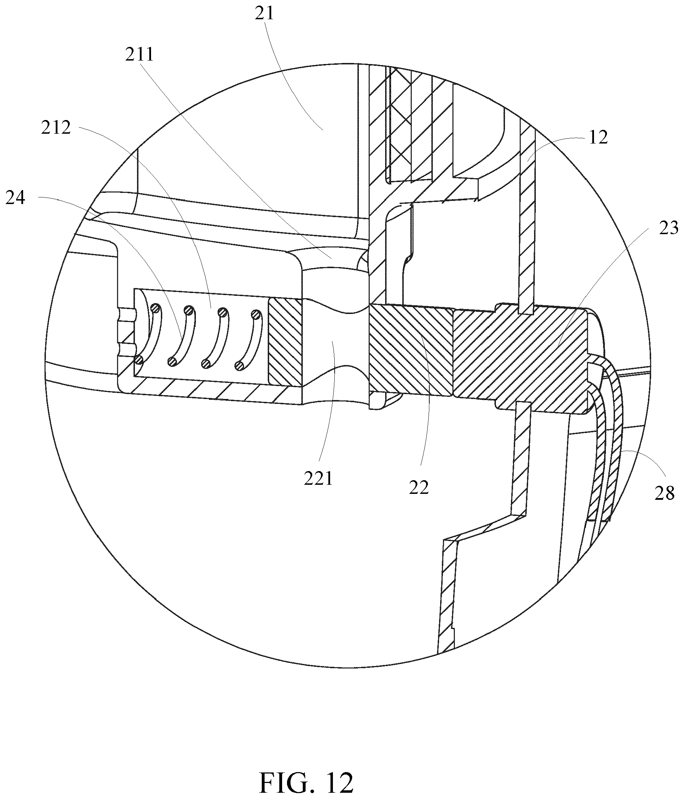

Figs. 11 and 12 show the cooking machine 10 according to an embodiment of the present invention, with the host 11 removed, in a state where the water outlet 211 of the water tank 21 is open. As shown in Figs. 11 and 12, when the electromagnet 23 is energized, the valve plug 22 is magnetized by the electromagnet 23 and driven, under the effect of the magnetic force of the electromagnet 23, to move from the initial first position to the second position for adding water. When the valve hole 221 of the valve plug 22 is in communication with the water outlet 211 of the water tank 21, the valve plug 22 is in the second position for adding water, and the water outlet 211 of the water tank 21 is in an open state. Thus, water in the water tank 21 can flow into the cooking pot 12 via the water outlet 211 and the valve hole 221 of the valve plug 22.

In order to ensure that the valve plug 22 is capable of returning to the initial first position from the second position in which the electromagnet 23 is energized, the automatic water-adding device according to embodiments of the present invention further comprises a spring 24. The spring 24 is also provided in the valve plug hole 212 of the pot cover 13, wherein one end of the spring 24 is connected to a first end face 222 of the valve plug 22, and the other end of the spring 24 is fixed to a wall of the valve plug hole 212.

Still in reference to Fig. 10, when the valve plug 22 is in the initial first position, the spring 24 is in a free state, and the second end face 223 of the valve plug 22 is spaced apart from the electromagnet 23. Still in reference to Figs. 11 and 12, when the electromagnet 23 is energized, it generates suction on the valve plug 22 by attracting the second end face 223 of the valve plug 22 so that the valve plug 22 drives the spring 24 to move in the valve plug hole 212 of the pot cover 13, the spring 24 is thus stretched until the valve plug 22 is in the second position. When the electromagnet 23 is de-energized, under the effect of the elastic recovery force of the spring 24, the valve plug 22 is pushed to move from the second position to the first position, until it returns to the initial first position, at which time the solid body part of the valve plug 22 blocks the water outlet 211 of the water tank 21 so that it is in a closed state. Thus, by turning the electromagnet 23 on and off, the communication and non-communication between the valve hole 221 of the valve plug 22 and the water outlet 211 of the water tank 21 is realized, and the switching between the two states, opened and closed, of the water outlet 211 of the water tank 21 is realized, which in turn makes the purpose of automatically adding water to the cooking pot 12 achieved.

In some embodiments, the electromagnet 23 is provided at the wall of the cooking pot 12. The wall of the cooking pot 12 acts to support and position the electromagnet 23. In an embodiment, as shown in Figs. 10 to 11, the electromagnet 23 is covered by the handle 18. Thus, the electromagnet 23 is enveloped inside the handle 18, preventing the electromagnet 23 from being exposed to the outside.

In order to supply power to the electromagnet 23, the automatic water-adding device according to embodiments of the present invention further comprises a power module (not illustrated) electrically connected to the controller, which can be provided on the circuit board inside the host 1 and can be controlled by the controller to supply power to the electromagnet. Thus, by controlling the power module, control of the ON and OFF of the electromagnet 23 is achieved.

In some embodiments, the automatic water-adding device further comprises a temperature sensor 25. The temperature sensor 25 is provided in the cooking pot 12 and used for measuring the temperature of food ingredients in the cooking pot 12, and will transmit the measured temperature of food ingredients to the controller. The temperature sensor 25 can be, for example, a negative temperature coefficient (NTC) resistance. Thus, a change in temperature of food ingredients in the cooking pot 12 is detected by means of a change in resistance.

When the temperature or temperature change rate of food ingredients measured by the temperature sensor 25 reaches a preset threshold, the controller can control the power module to supply power to the electromagnet 23. The preset threshold can be set to the temperature or temperature rise rate at which food ingredients may be burnt and stick to the pot bottom. During the operation of the cooking machine 10, for example, when the cooking machine 10 is cooking a dish having low water content, the temperature of the bottom of the cooking pot 12 will rise rapidly. When the food ingredient temperature measured by the temperature sensor 25 reaches a certain set temperature, the controller will send a control command to the power module in response to which the power module supplies power to the electromagnet 23, which is thus powered and operates. The electromagnet 23 attracts the second end face 223 of the valve plug 22 by a magnetic force, so that the valve plug 22 moves in such a way that the valve hole 221 of the valve plug 22 is in communication with the water outlet 211 of the water tank 21, which allows the water in the water tank 21 to flow into the cooking pot 12. Therefore, water can be automatically added into the cooking pot 12. By adding an appropriate amount of water, it is possible to avoid the possible burning and pot bottom sticking of food ingredients, and at the same time, it also avoids adding a large amount of oil to ensure the deliciousness and health of the food ingredients.

The automatic water-adding device according to embodiments of the present invention automatically controls the ON and OFF of the electromagnet 23 by means of temperature feedback to automatically add water or not into the cooking pot 12.

As shown in Fig. 3 and in reference to Figs. 10 and 11, in some embodiments, the automatic water-adding device further comprises a first coupler 26 and a second coupler 27 (as shown in Fig. 2). The first coupler 26 is provided on the base 14 of the cooking pot 12 and electrically connected to the electromagnet 23 via for example a conducting wire 28. The second coupler 27 is provided on the host 11 and electrically connected to the power module.

When the cooking pot 12 is installed on the host 11, the first coupler 26 on the base 14 of the cooking pot 12 and the second coupler 27 on the host 11 are coupled by insertion so as to electrically connect the electromagnet 23 to the power module. Thus, by the coupling between the first coupler 26 and the second coupler 27, the electrical connection of the electromagnet to the power module is achieved, and the power module can thus supply power to the electromagnet 23.

The cooking machine 10 according to embodiments of the present invention is more intelligent, and through the automatic water-adding device, water can be automatically added to the cooking pot 12 in a timely manner during cooking, so as to avoid the phenomena such as food burning and sticking to the bottom of the cooking pot when stir frying dishes in the cooking pot 12. It also avoids adding a lot of oil in cooking, ensuring that the food ingredients are less oily, healthy and delicious.

In addition, the cooking machine 10 having the automatic water-adding device according to embodiments of the present invention has a simple structural design, reliable performance, and a low cost.

What have been described above are only preferred embodiments of the present invention, and are not intended to limit the present invention. Any modifications, equivalent replacements, improvements, etc. made within the spirit and principles of the present invention shall fall within the scope of protection of the present invention.

## Claims

1. An automatic water-adding device for use in a cooking machine (10), the cooking machine (10) comprising a cooking pot (12) and a pot cover (13) that can cover and close the cooking pot (12), **characterized in that** the automatic water-adding device comprises:
- a water tank (21) for storing water provided on the pot cover (13) and having a water outlet (211);
- a valve plug (22) having a valve hole (221); and
- a controller,
wherein the controller is able to control the valve plug (22) to move between an initial first position in which the valve hole (221) of the valve plug (22) is not in communication with the water outlet (211) of the water tank (21) so that water in the water tank (21) cannot flow into the cooking pot (12) and a second position for adding water in which the valve hole (221) is in communication with the water outlet (211) of the water tank (21) so that water in the water tank (21) can flow into the cooking pot (12).

2. The automatic water-adding device of claim 1, wherein the valve plug (22) is made of magnetizable material and the automatic water-adding device further comprises:
- an electromagnet (23), the controller controls the valve plug (22) by controlling the ON and OFF of the electromagnet (23),
wherein when the electromagnet (23) is not energized, the valve plug (22) is in the initial first position; when the electromagnet (23) is energized, under the magnetic force of the electromagnet (23), the valve plug (22) is driven to move to the second position for adding water.

3. The automatic water-adding device according to claim 2 further comprising a spring (24) configured to enable the valve plug (22) to move back to the initial first position from the second position for adding water when the electromagnet (23) is de-energized.

4. The automatic water-adding device according to claim 3, wherein the pot cover (13) is provided with a valve plug hole (212), and the spring (24) is provided in the valve plug hole (212) together with the valve plug (22), one end of the spring (24) being connected to the valve plug (22), and the other end being fixed on a wall of the valve plug hole (212),
wherein when the electromagnet (23) is not energized, the spring (24) is in a free state, and the valve plug (22) and the electromagnet (23) are spaced apart; when the electromagnet (23) is energized, the electromagnet (23) attracts an end face of the valve plug (22) such that the valve plug (22) moves in the valve plug hole (212) and the spring (24) is stretched.

5. The automatic water-adding device according to any one of claims 2-4, wherein the electromagnet (23) is provided on a wall of the cooking pot (12).

6. The automatic water-adding device according to any one of claims 2-5, wherein the cooking machine (10) further comprises a handle (18) installed on the cooking pot (12), the electromagnet (23) being covered by the handle (18).

7. The automatic water-adding device according to any one of claims 2-6, wherein the cooking machine (10) comprises a host (11), and the automatic water-adding device further comprises:
- a power module electrically connected to the controller and used to supply power to the electromagnet (23),
wherein the controller and the power module are provided in the host (11), and the controller is used to control the power module.

8. The automatic water-adding device according to claim 7, wherein it further comprises:
- a temperature sensor (25) provided in the cooking pot (12) and used to measure the temperature of food ingredients in the cooking pot (12),
wherein when the temperature of the food ingredients or the rate of change of the temperature of the food ingredients measured by the temperature sensor (25) reaches a predetermined threshold, the controller controls the power module to supply power to the electromagnet (23).

9. The automatic water-adding device according to claim 8, wherein the temperature sensor (25) is a negative temperature coefficient resistance.

10. The automatic water-adding device according to any one of claims 7-9, wherein the cooking pot (12) comprises a base, and the automatic water-adding device comprises:
- a first coupler (26) provided on the base of the cooking pot (12) and electrically connected to the electromagnet (23);
- a second coupler (27) provided on the host (11) and electrically connected to the power module,
wherein when the cooking pot (12) is installed on the host (11), the first coupler (26) and the second coupler (27) are coupled so as to electrically connect the electromagnet (23) to the power module.

11. The automatic water-adding device according to any one of the preceding claims, wherein the water tank (21) and the pot cover (13) are integrally formed.

12. The automatic water-adding device according to any one of the preceding claims, wherein the valve plug (22) has a cylindrical shape with a first end face (222) and a second end face (223) opposed to each other, and the valve hole (221) is provided between the first end face (222) and the second end face (223).

13. A cooking machine comprising a host (11), a cooking pot (12) detachably installed on the host (11), and a pot cover (13) that can cover and close the cooking pot (12), **characterized in that** the cooking machine (10) comprises an automatic water-adding device according to any one of the preceding claims.
